# EUROPEAN PATENT APPLICATION

(11) **EP 4 852 371 A1**
(43) Date of publication of application: **09.12.2026**
(21) Application number: 25197981.1
(22) Date of filing: 25.08.2025
(51) Int. Cl.: H04L 9/08, H04B 10/118, H04B 10/70

(54) **QUANTUM SATELLITE SYSTEM**

(30) Priority: 05.06.2025 CA 3276107
(71) Applicant: D'Souza, Richard, Langley BC V2Y0R2 (CA)
(72) Inventor: D'Souza, Richard, Langley BC V2Y0R2 (CA)
(74) Representative: Arnason Faktor

(57) **Abstract**

The present disclosure discloses a quantum satellite system (100) comprising a housing (102) comprising a central body (104) and a plurality of modular armatures (106) extending outwardly from the central body (104), wherein the plurality of modular armatures (106) is arranged equidistantly, and each modular armature (106) receives, at a terminal end (108), a quantum entanglement emitter (110) that is configured to emit entangled photons toward a remote quantum communication node. The quantum satellite system (100) further comprises a quantum processing unit (112) housed within the central body (104) and configured to control entanglement protocols, manage quantum key generation, and assign quantum states to the emitted entangled photons. The quantum satellite system (100) also comprises a quantum random number generator (114) operatively coupled to the quantum processing unit (112) and configured to generate entropy values, generate a quantum key material using the generated entropy values, and control a quantum entanglement emitter array (116) to coordinate emission of the entangled photon.

## Description

### Field of the Invention

The present disclosure generally relates to satellite communication systems. Further, the present disclosure particularly relates to a quantum satellite system for emitting entangled photons toward a remote quantum communication node.

### Background

Quantum communication systems have seen widespread research and development activities in the past decades with the increasing requirement for secure information transfer. Multiple quantum communication systems are based on the transfer of quantum states over optical channels in order to create secure keys between distant parties. Numerous ground-based and satellite-assisted quantum key distribution frameworks have been proposed and demonstrated using a range of hardware platforms and deployment strategies. Continuous progress in quantum photonics and entanglement distribution has enabled expansion of such frameworks across regional and global distances. Multiple implementations of terrestrial quantum networks have demonstrated entangled photon transmission over fibre links and open-air channels. However, various environmental interferences, geographical limitations and physical obstructions have frequently constrained long-distance performance and scalability.

One known method for achieving global quantum communication comprises the use of geostationary satellites that transmit quantum states to ground stations. In such methods, a central satellite typically transmits entangled photon pairs to two distant ground receivers to establish quantum entanglement across extended distances. Such an approach frequently suffers from high signal attenuation due to long optical paths through atmospheric layers, scattering losses and pointing inaccuracies. Moreover, the necessity of a precise and continuous line-of-sight alignment between the satellite and the ground stations poses challenges, especially in dynamic or adverse atmospheric conditions. Furthermore, satellite-to-ground channel conditions are variable and sensitive to turbulence and cloud cover, which result in significant degradation in photon transmission rates and detection fidelity.

Another known approach employs low-earth-orbit satellite constellations to relay quantum signals across multiple orbital nodes. In such configurations, inter-satellite entanglement links and adaptive routing mechanisms are utilised to distribute quantum states between multiple locations. While such systems improve spatial coverage and minimise transmission losses due to reduced altitude, maintaining synchronisation across satellite nodes and sustaining entanglement fidelity over long orbital durations remain problematic. Repeated handovers and variations in orbital geometry introduce temporal misalignments and complex coordination requirements between satellite elements. Furthermore, increased hardware redundancy and higher payload complexity are required to support multiple directional entanglement channels, which further increases power consumption and thermal management burdens.

Additional terrestrial approaches rely on hybrid quantum-classical communication systems. In such systems, classical authentication is combined with quantum key generation to improve overall security. Although such systems provide a practical compromise for deployment in existing network infrastructures, such systems remain susceptible to classical attacks and limit the advantages offered by unconditional security features inherent in quantum-based communication. Additionally, terrestrial systems suffer from limited geographic reach and increased susceptibility to cable damage, signal leakage and regional outages due to infrastructure constraints.

Further known systems deploy optical ground networks with adaptive optics correction and quantum repeaters. Quantum repeaters are used to extend the communication range by performing entanglement swapping and purification processes. Despite theoretical feasibility, real-world deployment of such repeaters is limited due to hardware instability, low operational efficiency and susceptibility to decoherence. Moreover, maintaining phase synchronisation and error correction across long terrestrial distances involves complex control systems and calibration infrastructure that is not yet widely viable.

Other space-based systems utilise quantum receivers mounted on aerial platforms such as high-altitude balloons or aircraft. Although such airborne systems reduce transmission path length and provide mobile links, such platforms encounter stability issues, limited operational duration, and environmental interferences such as turbulence, temperature fluctuations and electromagnetic disturbances. Additionally, such platforms require frequent maintenance, altitude adjustments and extensive control input, which hinder long-term scalability.

In light of the above discussion, there exists an urgent need for solutions that overcome the problems associated with conventional systems and/or techniques for quantum communication via satellite-supported architectures.

### Summary

The following presents a simplified summary of various aspects of this disclosure in order to provide a basic understanding of such aspects. This summary is not an extensive overview of all contemplated aspects, and is intended to neither identify key elements nor delineate the scope of such aspects. Its purpose is to present some concepts of this disclosure in a simplified form as a prelude to the more detailed description that is presented later.

The following paragraphs provide additional support for the claims of the subject application.

An objective of the present disclosure is to provide a satellite-based system that enables spatially coordinated and secure quantum communication while mitigating limitations of conventional transmission channels and assuring dynamic management of quantum data. Another objective of the present disclosure is to enable reliable generation, control and emission of entangled quantum states through modular and orbitally adaptive satellite architecture.

In an aspect, the present disclosure provides a quantum satellite system comprising a housing comprising a central body and a plurality of modular armatures extending outwardly from the central body, wherein the plurality of modular armatures is arranged equidistantly and each modular armature receives, at a terminal end, a quantum entanglement emitter that emits entangled photons toward a remote quantum communication node. A quantum processing unit is housed within the central body and controls entanglement handling, manages quantum key generation and assigns quantum states to the emitted entangled photons. A quantum random number generator is operatively coupled to the quantum processing unit and generates entropy values, generates quantum key material using the entropy values and controls a quantum entanglement emitter array to coordinate emission of the entangled photons.

Furthermore, the equidistant configuration of the modular armatures enables dynamic orbital balance and equalised structural mass distribution, thereby supporting mechanical stability during satellite drift and rotation. Moreover, entropy-based key generation and quantum state assignment enables reliable implementation of entangled photon transmission by reducing predictability and enhancing randomness in quantum key distribution operations.

The quantum satellite system further comprises a plurality of EMP shielding fins extending radially from the central body, the EMP shielding fins absorb and deflect electromagnetic pulses originating from solar activity. Such shielding fins enable protective isolation of sensitive quantum components from space-weather-induced electromagnetic disturbances, thereby maintaining operational integrity of communication and computation hardware during periods of solar interference.

The quantum satellite system further comprises a plurality of radiation shielding vanes disposed between adjacent modular armatures, the radiation shielding vanes attenuate ionizing radiation for reducing qubit decoherence. The radiation shielding vanes provide an inter-armature protective structure that intercepts high-energy particles and cosmic rays, thereby mitigating effects of radiation-induced noise and information loss within quantum channels.

Each radiation shielding vane is formed of a material selected from boron carbide or a graphene composite. The use of such materials enables implementation of lightweight yet radiation-resistant shielding assemblies, thereby maintaining quantum coherence while reducing overall payload mass and improving energy efficiency of orbital deployment.

The housing comprises a thermal control unit comprising a passive cooling layer that dissipates heat via radiative and conductive pathways and an active cooling circuit that circulates a thermally conductive fluid or refrigerant to regulate temperature. Such dual-mode thermal regulation enables consistent component operation by countering temperature fluctuations generated by orbital cycles, solar exposure and internal computation activities.

The housing comprises a docking node to enable reprogramming of onboard firmware, offloading of encrypted mission data and access to diagnostic interfaces. The docking node enables controlled interface with ground systems or mobile servicing equipment for operational diagnostics, firmware updates and secure data retrieval during maintenance or data-handling procedures.

The quantum satellite system further comprises an Al processor operatively associated with the quantum processing unit, the Al processor monitors contextual parameters including mission objectives, node availability or threat conditions and dynamically assigns encryption policies or quantum routing instructions based on the monitored parameters. The Al processor enables autonomous operational adaptation to dynamically shift orbital environments and node connectivity variations, supporting real-time cryptographic instruction updates and routing control.

The housing comprises a communication interface to enable establishment of quantum communication links with a distributed network of external nodes. The communication interface provides routing access to orbitally or terrestrially distributed endpoints, thereby supporting wide-area entanglement distribution and enabling scalable quantum network implementation.

The quantum entanglement emitter array emits entangled photons toward at least two spatially distinct ground stations or satellite nodes to support quantum entanglement distribution across a mesh network. Emission to spatially separated targets supports parallel entanglement generation and redundant quantum channel setup, enhancing the operational flexibility of satellite-based communication arrays.

The quantum satellite system further comprises a plurality of threat detection antennas mounted on the housing, each of the threat detection antennas detects electromagnetic interference, high-velocity impact events or elevated radiation levels and generates a response signal based thereon. The threat detection antennas provide continuous environmental monitoring for harmful spaceborne phenomena, enabling responsive safeguarding actions across the satellite architecture.

Each modular armature comprises a deployment mechanism that extends the quantum entanglement emitter outward from a stowed configuration during an operational mode. The deployment mechanism provides mechanical actuation for spatial transition of the entanglement emitters, facilitating operational readiness following launch or prior to directional targeting of ground stations.

The quantum satellite system further comprises an Al-managed data repository operatively coupled to the quantum processing unit, the data repository dynamically controls data retention, access privileges and secure deletion of quantum-sensitive information based on detected threats, operational conditions or telemetry status. The Al-managed repository supports secure data lifecycle control by dynamically enforcing quantum security protocols under varying mission and environmental parameters.

The quantum entanglement emitter array emits entangled photons simultaneously across a plurality of quantum domains, the quantum domains comprise polarization, spin angular momentum and orbital angular momentum. Emission across multiple domains enables composite encoding techniques and multidimensional quantum state representation, supporting enhanced quantum throughput and fidelity.

Each modular armature is mechanically coupled to the central body via a sliding rail interface; the sliding rail interface allows radial repositioning of the quantum entanglement emitter to adjust beam angle or field of view. The radial repositioning mechanism enables directional adaptation to dynamic alignment requirements during satellite manoeuvres or multi-node targeting.

Each modular armature comprises an integrated actuator configured to transform the modular armature between a stowed position and a deployed position based on an orbital phase or an operational command. Such actuation mechanism enables structured extension and retraction of the armature body to adapt physical dimensions based on storage constraints or mission triggers.

Each modular armature comprises a locking mechanism configured to retain the quantum entanglement emitter in a fixed deployed position and to prevent an unintentional retraction or a mechanical vibration during quantum emission. The locking mechanism provides structural stability by securing emitter positioning during photon emission and isolating mechanical vibrations caused by orbital dynamics or deployment shock.

A method for operating the quantum satellite system comprises deploying a satellite comprising the central body and the plurality of modular armatures extending equidistantly from the central body, generating entropy values using the quantum random number generator disposed within the central body, generating quantum key material using the quantum processing unit operatively coupled to the quantum random number generator based on the generated entropy values, assigning quantum states to entangled photons via the quantum processing unit, emitting the entangled photons from the plurality of quantum entanglement emitters mounted at the terminal ends of the modular armatures toward remote quantum communication nodes, coordinating the emission of the entangled photons in accordance with a quantum communication structure and maintaining structural balance during orbital rotation or drift using the equidistant arrangement of the modular armatures.

The method further comprises adjusting the orientation of at least one quantum entanglement emitter in real time using a calibration assembly based on angular misalignment measurements. The calibration assembly enables angular correction during active emission phases by realigning photon direction to maintain target connectivity despite orbital fluctuations.

### Brief Description of the Drawings

The features and advantages of the present disclosure would be more clearly understood from the following description taken in conjunction with the accompanying drawings in which:
FIG. 1 illustrates a quantum satellite system.
FIG. 2 illustrates a method for operating the quantum satellite system.
FIG. 3 illustrates a data flow diagram representing the sequential information exchange and functional hierarchy within a quantum satellite system.
FIG. 4 illustrates domain-based photon distribution by the quantum entanglement emitter array to multiple remote quantum nodes.
FIG. 5 illustrates a system-level communication architecture for coordinating quantum operations within the quantum satellite system .
FIG. 6 illustrates the domain-based distribution of entangled photon streams from a quantum satellite system to multiple remote quantum communication nodes.

### Detailed Description

In the following detailed description of the invention, reference is made to the accompanying drawings that form a part hereof, and in which is shown, by way of illustration, specific embodiments in which the invention may be practiced. In the drawings, like numerals describe substantially similar components throughout the several views. These embodiments are described in sufficient detail to claim those skilled in the art to practice the invention. Other embodiments may be utilized and structural, logical, and electrical changes may be made without departing from the scope of the present invention. The following detailed description is, therefore, not to be taken in a limiting sense, and the scope of the present invention is defined only by the appended claims and equivalents thereof.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Pursuant to the "Detailed Description" section herein, whenever an element is explicitly associated with a specific numeral for the first time, such association shall be deemed consistent and applicable throughout the entirety of the "Detailed Description" section, unless otherwise expressly stated or contradicted by the context.

As used herein, the term "quantum satellite system" refers to a spaceborne assembly comprising subsystems supporting quantum communication, computation, or sensing operations in orbital environments. The quantum satellite system involves physical elements installed on an orbital platform that altogether produce, control, send, or receive quantum information like quantum states, qubits, or entangled photon pairs. The quantum satellite system interacts with terrestrial, aerial, or other satellite nodes for long-distance quantum state transmission and quantum key distribution. Quantum operations performed by the quantum satellite system include entanglement generation, state encoding, quantum key derivation, and photon transmission over free-space optical channels. The quantum satellite system includes optical payloads, quantum processors, photon sources, photon detectors, pointing mechanisms, and thermal regulation components. The quantum satellite system includes an orbital payload configured to transmit entangled photons to multiple earth-based stations for quantum key exchange or teleportation verification. The quantum satellite system operates at low Earth orbit or geostationary orbit depending on mission requirements and the spatial distribution of the quantum network.

As used herein, the term "housing" refers to an enclosure or structural containment that supports, organises, and shields internal assemblies or subsystems from orbital environmental exposures such as vacuum, radiation, micrometeoroid impact, and thermal cycling. The housing includes externally facing panels, internal bracing structures, and mounting provisions for integration of computing, power, thermal, and communication components. The housing is made of composite or treated metals for achieving weight reduction without sacrificing structural stiffness under mechanical loading and thermal flow. Internal configuration within the housing provides spatial separation and thermal isolation of heat-generating components from sensitive electronic or optical elements. The housing also provides interfaces for external surface-mount elements such as solar panels, antennas, or directional emitters. The housing forms the primary mechanical boundary of the system and serves as the attachment interface with a launch vehicle payload adapter. The housing must meet dimensional and vibration standards defined for orbital launch and deployment conditions.

As used herein, the term "central body" refers to a structural core of housing that provides a mechanical and spatial foundation for mounting surrounding components. The central body functions as the geometric and mass distribution reference for other subsystems, and supports internal cabling, power routing, and subsystem interfacing. The central body is composed of metal alloys, carbon composites, or hybrid materials selected for strength-to-weight ratio and resistance to orbital thermal cycling. The central body connects with other structures such as armatures or external panels and maintains internal alignment for optical and computational elements. The central body houses subsystems including batteries, quantum processors, control units, and data storage elements. In multi-axis satellite configurations, the central body defines the pitch, yaw, and roll reference axes and provides the inertial reference point for attitude determination and control systems.

As used herein, the term "modular armature" refers to a structural extension that protrudes from a primary body to support attachment or deployment of peripheral components in a spatially distributed arrangement. The modular armature is rigid or articulated and is constructed using composite materials, aluminium alloys, or reinforced polymers suitable for low-mass and high-strength applications. The modular armature provides mounting surfaces or channels for electrical, optical, or thermal connectivity between central structural elements and externally placed functional units. In orbital systems, the modular armature is used to position sensors, antennas, emitters, or reflectors at specified distances from a central axis to prevent interference or thermal cross-talk. The modular armature contains embedded guides or conduits for routing power or signal cables. Based on mission needs, the modular armature is permanently fixed or have actuation capabilities for deployment and stowage between states. Some examples include satellite appendages for directional optics, solar arrays, or radiating structures.

As used herein, the term "terminal end" refers to the distal portion or outermost section of an elongated structural component, such as a beam, rod, or armature, that serves as a mounting or interface location for a functional unit. The terminal end is placed geometrically most distant from the center axis or base of the structure and is shaped, strengthened, or embedded with features to allow for stable device fixation. The terminal end comprise connection points, brackets, thermal breaks, or isolation pads, depending on the physical and operational requirements of the attached unit. In mechanical or orbital systems, the terminal end is employed to support emitters, sensors, reflectors, or antennas that need spatial separation from the central body in order to minimize signal blocking or thermal interference. Materials forming the terminal end are selected for mechanical durability and compatibility with the attached component.

As used herein, the term "quantum entanglement emitter" refers to a component that generates and emits entangled quantum states, typically realised in the form of photon pairs that exhibit correlated quantum properties such as polarisation or angular momentum. The quantum entanglement emitter operates using nonlinear optical crystals, semiconductor quantum dots, or spontaneous parametric down-conversion processes where pump photons are split into entangled photon pairs. The quantum entanglement emitter comprises integrated optics for beam shaping, direction control, and emission angle stabilisation. Associated subsystems comprise temperature control elements, alignment modules, and photon timing circuits to enable coherent and synchronised emission. The quantum entanglement emitter is directed toward remote receivers in ground-based or satellite communication nodes, enabling distributed entanglement generation for quantum key distribution or quantum teleportation operations. The quantum entanglement emitter implementations comprise sources using beta-barium borate crystals pumped with laser diodes or entangled-photon-pair generation systems integrated into photonic integrated circuits.

As used herein, the term "remote quantum communication node" refers to a spatially separated endpoint within a quantum communication network that receives, processes, or interacts with quantum states transmitted through a free-space or guided optical channel. The remote quantum communication node is located on ground-based infrastructure, airborne platforms, or other orbital units and is physically distinct from the quantum state transmitter. The remote quantum communication node also consists of elements for quantum state detection like single-photon detectors, beam splitters, polarisation analysers, and time synchronisation modules. The node also comprises classical communication links utilized in enabling post-processing operations like key sifting, error correction, and entanglement verification. The remote quantum communication node is aligned with quantum emitters using tracking and pointing subsystems to assure optical link stability. The remote quantum communication node comprises ground stations equipped with optical telescopes, adaptive optics systems, and quantum key distribution receivers configured for use in satellite-to-ground or inter-satellite entanglement scenarios.

As used herein, the term "quantum processing unit" refers to a hardware assembly executing operations on quantum information represented in the form of qubits, entangled photon pairs, or other quantum states. The quantum processing unit comprise subsystems for quantum logic gate application, state measurement, error correction, entanglement management, and communication state preparation. The quantum processing unit interacts with both quantum and classical subsystems, often incorporating classical processors, memory controllers, and data routing hardware to support hybrid operations. Physical realisations of the quantum processing unit utilise technologies such as trapped ions, superconducting circuits, photonic qubit platforms, or nitrogen-vacancy centres depending on system requirements. The quantum processing unit enables dynamic control over state assignment, timing synchronisation, and conditional routing of photons emitted or received during transmission. The quantum processing unit manages entanglement tasks and key generation sequences, assuring compliance with timing constraints imposed by orbital motion and free-space link durations.

As used herein, the term "quantum random number generator" refers to a device that uses quantum processes to generate sequences of numbers that exhibit true randomness, not deterministically predictable by any computational or statistical model. Inherently probabilistic quantum phenomena, like photon arrival times, quantum vacuum fluctuations, or single-photon beam-splitting results, are the source of randomness for the quantum random number generator. The quantum random number generator includes components such as beam splitters, photodiodes, photon sources, and post-processing circuits to extract usable entropy from raw detection events. The generator is implemented using optical, solid-state, or hybrid platforms, with operational emphasis on minimising bias, latency, and external influence. The quantum random number generator is used to produce secure key material, determine basis settings, or select measurement configurations without introducing deterministic predictability.

As used herein, the term "entropy value" refers to a quantitative measure of randomness or unpredictability derived from a physical or quantum process, which serves as a foundational input for generating cryptographic keys or probabilistic control decisions. The entropy value originates from sources that exhibit nondeterministic behaviour, such as quantum fluctuations, radioactive decay, photon detection events, or electronic thermal noise. In quantum systems, entropy values are typically extracted from measurements of quantum states that are fundamentally uncertain until observed, such as the path of a single photon through a beam splitter. The entropy value is represented in digital format after analogue-to-digital conversion and optional post-processing steps that remove bias and noise correlation. High entropy values help make generated keys unpredictable in cryptographic uses and facilitate statistical uniformity in the mechanisms of random choice. For instance, in a photon-based source of entropy, jitter in photon arrival times at a beam splitter output is sampled and treated to produce entropy values applied in quantum key generation schemes.

As used herein, the term "quantum key material" refers to a set of digital keys or binary strings derived from measurements of quantum states and are used in cryptographic applications for secure data transmission or authentication. The quantum key material is obtained using quantum key generation techniques that depends on the statistical outcomes of quantum measurements between communicating nodes. The material is formed by correlating the results of measurements performed on entangled photons or on prepared quantum states transmitted between sender and receiver, followed by classical post-processing such as key sifting, error correction, and privacy amplification. The quantum key material possesses information-theoretic security due to the fundamental properties of quantum mechanics, which makes sure that any eavesdropping attempt introduces detectable disturbances. The quantum key material is used directly for one-time pad encryption or serve as seed input for symmetric encryption algorithms.

As used herein, the term "quantum entanglement emitter array" refers to a spatially distributed arrangement of a plurality of quantum emitters, which generate and emit entangled photons for parallel or redundant transmission channels. The quantum entanglement emitter array comprises two or more entangled photon sources mounted in fixed or adjustable configurations to serve different optical paths or communication nodes. Each emitter within the quantum entanglement emitter array operates independently or in synchronised fashion, allowing for simultaneous generation of entangled states toward multiple receivers. Such array comprises optical alignment systems, timing synchronisation circuits, and beam steering mechanisms to direct emission to specific targets in space or on Earth. Integration of multiple emitters supports scalable quantum communication architectures, mesh network structures, and spatial redundancy. Examples of quantum entanglement emitter array implementations include arrays of spontaneous parametric down-conversion sources using multiple nonlinear crystals and pump lasers arranged on an optical bench with beam splitting and switching elements for emission control.

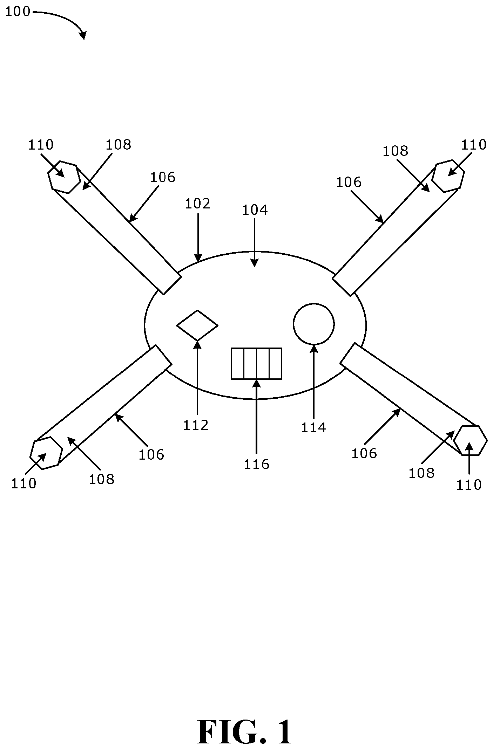

FIG. 1 illustrates a quantum satellite system (100). The quantum satellite system (100) comprises a housing (102), wherein the housing (102) includes a central body (104) forming a structurally stable core segment. The central body (104) will have a plurality of modular armatures (106), each modular armature (106) extending outwardly from the central body (104) in a spatially uniform direction. The plurality of modular armatures (106) are placed in an equidistant radial pattern relative to the central body (104), thereby providing geometric symmetry and mass balance throughout the quantum satellite system (100). Each of the modular armatures (106) terminates with a terminal end (108), where the terminal end (108) provides mechanical and optical interfacing for a quantum entanglement emitter (110). The quantum entanglement emitter (110) is aligned for directional photon transmission to a far-field quantum communication node, terrestrial, aerial, or orbital. Positioning all quantum entanglement emitters (110) at terminal end (108) brings spatial separation of photon emission sources to minimize cross-interference and guarantee angular independence of emitted beams.

In an embodiment, the quantum satellite system (100) further comprises a quantum processing unit (QPU) (112) disposed within the central body (104), wherein the QPU (112) interacts with the quantum entanglement emitter (110) via dedicated optical and electronic interfaces. The QPU (112) controls entanglement-related operations, manages generation of quantum key material, and assigns quantum states to outgoing photon (transmissions initiated by the quantum entanglement emitter (110)). The QPU (112) receives command signals, measurement inputs, and synchronization cues necessary for regulating photon state parameters under real-time orbital dynamics. State assignment operations performed by the QPU (112) involve selection of quantum degrees of freedom such as polarisation basis, phase angle, or orbital angular momentum for each emitted photon or photon pair. State preparation parameters is adjusted in response to contextual mission data, thermal stability metrics, or entanglement verification results. QPU (112) communicates with photon detectors, beam splitters, and time correlation circuits to achieve coherent control of entangled photon behaviour.

In an embodiment, the QPU (112) is electrically coupled to a quantum random number generator (QRNG) (114), which further is incorporated in the structural volume occupied by the central body (104). QRNG (114) conducts entropy harvesting based on quantum mechanical phenomena like photon path randomness, vacuum fluctuation sampling, or single-photon event timing. QRNG (114) produces raw entropy values based on inherently unpredictable measurement outcomes derived from nondeterministic quantum sources. Output signals from QRNG (114) are processed to generate quantum key material that exhibits statistically uniform and uncorrelated bit distribution suitable for cryptographic applications. Entropy values and derived key material generated by the QRNG (114) are synchronised with the control cycle of the QPU (112), such that the assignment of quantum states and photon emission timing remain mutually consistent and securely derived.

In one embodiment, the QRNG (114) also engages with a quantum entanglement emitter array (116), consisting of multiple elements of the quantum entanglement emitter (110) configured to offer spatially distributed photon emission. Quantum entanglement emitter array (116) is controlled by control signals based on entropy values, thus modulating sequences of emissions, activation timing for beams, and orientation of output in response to nondeterministic input. The quantum entanglement emitter array (116) operates in multiplexed or parallel emission modes depending on the selected communication configuration, optical line-of-sight availability, and mission prioritisation matrix. Each emitter within the quantum entanglement emitter array (116) is operated independently or in synchronised cycles to support simultaneous communication with multiple quantum communication nodes located at distinct spatial coordinates.

In one embodiment, the housing (102) is a structural interface and environmental buffer for internal subsystems such as the QPU (112), the QRNG (114), and mechanical supports for the modular armatures (106). The housing (102) offers structural stiffness, thermal isolation, and radiation shielding necessary for orbital use, and constitutes an integration surface for externally mounted parts such as antennas, thermal radiators, or solar panels. The housing (102) defines internal volumes for routing of optical fibres, electrical wiring, and coolant channels, which support interconnection between the central body (104), the QPU (112), and the modular armatures (106). The housing (102) is composed of composite materials, aluminium alloys, or carbon-reinforced structures fabricated to meet deployment constraints associated with orbital launch and satellite packaging.

In one embodiment, the modular armature (106) forms a supporting structure that radiates radially outward from the central body (104) and gives mechanical reach and spacing to the terminal end (108) where each quantum entanglement emitter (110) is mounted. The modular armature (106) provides directional stability and optical alignment through times of acceleration, attitude control maneuvers, and thermal fluctuation. Internal to the modular armature (106), pathways are provided for routing of electrical power, communication signals, and thermal exchange conduits. The modular armature (106) is optionally incorporate actuation hardware or damping mechanisms to support limited mechanical articulation or vibrational isolation, depending on mission configuration.

In one embodiment, the terminal end (108) of each modular armature (106) offers a mechanical fixture and optical interface for a single instance of the quantum entanglement emitter (110). The terminal end (108) is also spatially distinct from the central body (104) to minimize electromagnetic and thermal coupling effects as well as to assure clear transmission pathways for emitted photon beams. Mechanical fixture at the terminal end (108) includes lens mounts, anti-vibration seals, or beam-guiding reflectors. Terminal end (108) provides positional locking and angular integrity of the quantum entanglement emitter (110) during operating phases with orbital rotation or low-intensity satellite vibration. Spatial orientation of the terminal end (108) with respect to a geodetic reference system is calibrated on pre-deployment verification or post-deployment calibration.

In one embodiment, the quantum entanglement emitter (110) is an optical source that generates photon pairs with entanglement in one or more degrees of freedom, such as polarisation or phase. Photon pair generation is realised through nonlinear optical processes like spontaneous parametric down-conversion or four-wave mixing, depending on pump laser input and crystal alignment. The quantum entanglement emitter (110) includes beam collimation optics, state preparation elements, and synchronisation interfaces for time-tagging emitted photon pulses. The quantum entanglement emitter (110) is optically aligned toward a communication node to enable state correlation with a remote receiver. Temporal gating, filtering, and emission diagnostics are included as part of internal circuitry of the emitter or embedded optics. Emission direction is fixed or dynamically adjusted via beam-steering optics or gimbal-mounted lensing elements located near the terminal end (108). Each photon emission event is tagged with metadata relating to time of generation, emission angle, and intended receiver node to facilitate downstream correlation during key extraction processes.

In an embodiment, the quantum entanglement emitter array (116), when operating in aggregate, supports multiplexed communication strategies across multiple spatial domains. Subsets of the quantum entanglement emitter (110) is selectively activated to transmit quantum states toward independently located receivers, supporting mesh-type quantum networks or simultaneous key distribution to parallel endpoints. Operational scheduling of the quantum entanglement emitter array (116) is coordinated with the processing cycle of the QPU (112) and the entropy output from the QRNG (114), resulting in a nondeterministic but synchronised communication framework. Temporal division or spatial separation is employed to reduce optical path overlap between concurrently active emitters, thereby minimising channel crosstalk and entanglement degradation.

In an embodiment, the arrangement defined by the housing (102), the central body (104), the plurality of modular armatures (106), and the terminal ends (108) results in an architecture wherein photon emission sources are structurally isolated yet centrally managed. QPU (112) and QRNG (114) constitute a closed-loop quantum information management core wherein key generation, entropy evaluation, state assignment, and emitter control are executed with continuous feedback regulation. The quantum satellite system (100) is operable in orbital conditions and adaptable to variable communication loads by selection and modulation of emitter states, activation timing, and quantum key delivery cycles based on mission-specific quantum networking objectives.

In an embodiment, the quantum satellite system (100) may have a plurality of EMP shielding fins extending radially from the central body (104). The EMP shielding fins are intended to absorb and divert electromagnetic pulses due to solar radiation. The radial disposition of the EMP shielding fins relative to the central body (104) provides a circumferential shield barrier around the housing (102), thereby enabling spatial distribution of uniform shielding. Aforementioned EMP shielding fins can comprise laminated composite layers of conductive metal and absorptive polymers to dampen high-energy transients caused by coronal mass ejections or solar flare activity. Structural coupling of aforementioned EMP shielding fins with housing (102) enables a secure interface for vibration disturbances endured during satellite operation and deployment. EMP shielding fins can consist of geometric pretreatments like serrations or perforation on the surfaces to diffuse impinging wavefronts and reduce reflection back into the housing (102). Coupling of the EMP shielding fins with thermal dissipation coatings may also enable passive cooling under prolonged exposure to charge particle events.

In an embodiment, the quantum satellite system (100) may comprise a plurality of radiation shielding vanes disposed between adjacent modular armatures (106). The radiation shielding vanes extend outwardly from the central body (104) along structural intervals separating each modular armature (106), thereby forming a continuous shielding array encircling the quantum entanglement emitter array (116). The radiation shield vanes shield ionizing radiation (that is common in orbital environments) such as high-energy protons, electrons, and gamma rays. The radiation shield vanes prevent qubit-related components from direct exposure to charged particles, thus maintaining state fidelity during quantum key distribution operations. Physical construction of the radiation shielding vanes may involve layered composite structures comprising high atomic number elements embedded within a polymeric substrate. Placement of the radiation shielding vanes within the inter-armature regions maximises protection of subsystems residing along the beam paths of each quantum entanglement emitter (110). The fixed spacing between modular armatures (106) facilitates modular insertion of the radiation shielding vanes without obstructing deployment mechanisms or angular mobility of the emitters. Surface coatings on the radiation shielding vanes may comprise low-emissivity layers to limit thermal re-radiation toward the housing (102), thus supporting thermal balance.

In an embodiment, each radiation shielding vane of the quantum satellite system (100) may be formed of a material selected from boron carbide or a graphene composite. The materials are selected based on mechanical durability, radiation attenuation capacity, and compatibility with orbital deployment conditions. Boron carbide, due to low density and high neutron absorption cross-section, provides effective mitigation of secondary radiation effects caused by primary particle collisions. The boron carbide vanes may be fabricated through powder sintering or chemical vapour infiltration techniques to achieve dimensional conformity and surface integrity. Alternatively, the radiation shielding vanes may be made of graphene composite materials that offer superior strength-to-weight ratio, high thermal conductivity, and reduced susceptibility to micrometeoroid impact. The graphene composites may comprise multilayered laminate structures or hybrid configurations with embedded metal oxides for additional shielding efficacy. The selection of either boron carbide or graphene composite is made on the basis of performance constraints between mass limit and shield efficiency. Above materials are also selected for thermal stability over the broad temperature range encountered in sunlit and eclipse mission phases.

In an embodiment, the housing (102) of the quantum satellite system (100) may comprise a thermal control unit that has a passive cooling layer and an active cooling circuit. The passive cooling layer dissipates heat by means of radiative and conductive paths by utilizing surface coatings, conductive base materials, and heat-spreading panels that are attached to outer surfaces of the housing (102). Passive cooling layer comprises high-emissivity coatings and thermal conductive foils to transfer internal heat towards radiative panels (exposed to deep space). Active cooling loop utilized a thermally conductive fluid or refrigerant circulated within embedded tubing channels heading towards high heat-load devices like QPU (112) and QRNG (114). Incorporated in the active cooling circuit are micro-pumps, fluid reservoirs, and phase-change components like heat pipes or loop heat transfer systems. The fluid path is split to prevent vibration coupling with structural components, and routing is thermally decoupled from radiation-sensitive assemblies. The thermal control unit regulates the internal housing temperature (102) to prevent performance degradation due to orbital temperature variation, high attitude rates of change, or continuous operational heat generation.

In one implementation, the housing (102) of the quantum satellite system (100) can comprise a docking node to facilitate reprogramming onboard firmware, offloading encrypted mission data, and access to diagnostics interfaces. The docking node supplies a mechanical and electrical interface point that facilitates physical connection of the satellite with ground-based or in-orbit servicing equipment. The docking node may be structured to accommodate multiple connector types including high-density data ports, shielded power inputs, and redundant signal channels. The docking node is positioned on an exterior panel of the housing (102) to affirm accessibility during integration, testing, and post-deployment servicing operations. Communication through the docking node is protected via encryption keys (generated by the QPU (112)), thereby preventing unauthorized access to stored firmware packages. Diagnostic operations such as software updates, subsystem calibration, events log acquisition, and health monitoring are offered by the docking node. The mechanical structure of the docking node is made up of vibration-dampened mounts and thermal shielding pieces for signal integrity and structure stability under orbital conditions. The docking node also supports autonomous interfacing protocols for robot or semi-autonomous maintenance missions. The docking node is also electrically separated from quantum emission subsystems to cancel electromagnetic interference during active data communications.

In an embodiment, the quantum satellite system (100) may comprise an Al processor operatively associated with the QPU (112). The Al processor monitors contextual parameters comprising mission objectives, node availability, and threat conditions. The Al processor executes at least one selected from pattern recognition, decision trees, or reinforcement learning techniques to interpret telemetry data, communication status, and orbital trajectory updates. Based on such interpretation, the Al processor dynamically assigns encryption policies or quantum routing instructions to optimise secure communication links. Routing decisions account for network latency, link loss statistics, and quantum bit error rate measurements. Encryption policies are selected from pre-defined templates or adaptively modified based on environmental factors and adversarial signal detection. The Al processor is placed within the housing (102) and thermally coupled to the thermal control unit to regulate processor performance across varying operational loads. The Al processor receives input from radiation monitors, antenna subsystems, and gyroscopic stabilisation units. Output decisions are transmitted to the QPU (112) for implementation, thereby forming a control loop that responds in near-real-time to internal and external conditions. The Al processor may also coordinate power allocation schedules and prioritise emitter usage across the quantum entanglement emitter array (116) based on mission demand.

In an embodiment, the housing (102) may comprise a communication interface to enable establishment of quantum communication links with a distributed network of external nodes. The communication interface comprises optical transceivers, acquisition and tracking sensors, and beam steering mechanisms that align outbound and inbound communication pathways with partner nodes. The communication interface operates within pre-defined frequency windows for both classical and quantum signals, including synchronisation channels and key distribution signals. Optical apertures within the housing (102) are aligned with the communication interface to maintain unobstructed beam propagation. Pointing control for the communication interface may be achieved via internal micro-actuators or cooperative attitude adjustments supported by onboard guidance systems. The communication interface also manages error detection, timing synchronisation, and adaptive handshake routines required for quantum key establishment with ground stations or orbital peers. The communication interface supports multi-node operation by switching between receiver coordinates or duplicating emission cycles via the quantum entanglement emitter array (116). The communication interface is operatively linked to the QPU (112) and responds to node visibility forecasts and orbital alignment data to initiate or suspend communication attempts. The communication interface is shielded against radiation-induced charge accumulation and thermally stabilised by the thermal control unit.

In one embodiment, the quantum entanglement emitter array (116) can send entangled photons to at least two spatially separated ground stations or satellite nodes so that quantum entanglement can be distributed in a mesh network. The quantum entanglement emitter array (116) includes an array of quantum entanglement emitters (110) in a geometric configuration allowing for simultaneous emission in a plurality of directional vectors. Each quantum entanglement emitter (110) is aligned toward a distinct communication endpoint based on orbital tracking and system scheduling. Emission events are time-tagged and synchronised using internal clocks referenced by the QPU (112) to enable coincidence detection across multiple receivers. The quantum entanglement emitter array (116) supports redundancy by enabling multiple emitters to target the same node for error mitigation or signal boosting. Emission parameters such as photon polarisation, phase, and entanglement basis are selected in coordination with entropy inputs from the QRNG (114). Optical shielding and isolation are used to avoid crosstalk among neighboring emitters. The emitter array is structurally supported by the modular armatures (106), where each emitter is housed in a terminal end (108). The array accommodates fixed-beam and dynamically steered emission modes for flexible integration in networks.

In an embodiment, the quantum satellite system (100) may comprise a plurality of threat detection antennas mounted on the housing (102), each of the threat detection antennas being configured to detect at least one of electromagnetic interference, high-velocity impact events, or elevated radiation levels, and to generate a response signal based thereon. Aforementioned threat detection antennas are physically separated on the outer surface of the housing (102) to provide spatially detection coverage. Every threat detection antenna may comprise on-board sensors that are capable of sensing electromagnetic spectrum anomalies, mechanical vibration, or radiation dosage levels above baseline. Anomalies detected are analyzed instantaneously and converted to digital signal, which is sent to the QPU and Al processor (112). Threat detection antennas are linked via shielded cabling routed inside the housing (102), and the link is signal loss-hardened against thermal gradients or orbital radiation. The antennas can have deployable or retractable sections to increase detection range or decrease drag when making orbital adjustments. The response signal produced by the antennas initiates a pre-programmed operation protocol, which can involve shielding of exposed subsystems, re-routing of quantum emission duties, or engagement of shielding devices like the EMP shielding fins or radiation shielding vanes.

In an embodiment, each modular armature (106) of the quantum satellite system (100) may comprise a deployment mechanism configured to extend the quantum entanglement emitter (110) outward from a stowed configuration during an operational mode. The deployment mechanism includes mechanical actuators, guide tracks, and locking features that control movement of the quantum entanglement emitter (110) from a compact, launch-compatible configuration to an extended position that provides an unobstructed emission path. Deployment motion may be achieved through the use of linear actuators, torsion springs, or stepper motors powered by onboard energy storage systems. The deployment mechanism is housed internally within the structure of the modular armature (106) and is thermally isolated from the emission optics to prevent heat-induced misalignment. Mechanical tolerances of the deployment mechanism are chosen to affirm angular stability and deploy cycle repeatability over multiple operational sessions. When in fully extended position, the deployment mechanism engages a locking interface to prevent the emitter from rotating out of fixed spatial relationship. Sensors embedded with the deployment mechanism provide real-time positional information to the QPU (112) to confirm completion of the deployment phase before activating the emission sequence from the quantum entanglement emitter (110).

In one aspect, the quantum satellite system (100) may comprise an Al-driven data storage coupled operatively with the QPU (112), the data storage dynamically controlling data retention, access control, and secure erasure of quantum-sensitive information based on sensed threats, operational status, or telemetry health. The data repository consists of nonvolatile memory units, real-time data queues, and encryption management hardware integrated into the internal subsystem layout of the housing (102). The Al-managed data repository receives input from the QPU (112), the Al processor, and system-wide monitoring sensors to determine the required data storage or deletion operations. Retention policies are based on data classification, mission phase, and threat detection input. Access to the repository is controlled by dynamic authentication procedures derived from quantum key material generated by the QRNG (114). When elevated risk conditions are detected by the threat detection antennas or internal telemetry analysis, the data repository initiates secure deletion routines including cryptographic erasure or physical overwriting of memory blocks. The data repository supports telemetry buffering, mission data archiving, and secure offload procedures through the docking node provided in the housing (102).

In an embodiment, the quantum entanglement emitter array (116) may emit entangled photons simultaneously across a plurality of quantum domains, the quantum domains comprising polarisation, spin angular momentum, and orbital angular momentum. The simultaneous domain emission enables multidimensional encoding of quantum states, thereby increasing channel capacity and offering compatibility with varied receiver configurations. Each quantum entanglement emitter (110) of the quantum entanglement emitter array (116) contains optical components like waveplates, q-plates, and holographic phase masks to condition photon states in individual quantum domains. Domain selection is controlled by control commands from the QPU (112) in conjunction with entropy sources supplied by the QRNG (114). Each emitted photon pair is directed with domain-specific metadata to assist ground-based or satellite receivers in identifying the state configuration. The quantum entanglement emitter array (116) supports synchronous emission timing, and active feedback from receiving nodes may trigger real-time adjustment of domain mixing ratios. Mechanical alignment structures and vibration-isolated optical benches are integrated into each terminal end (108) to prevent misalignment of phase-sensitive domain encoding optics during orbital motion or deployment transitions.

In an embodiment, each modular armature (106) may be mechanically coupled to the central body (104) via a sliding rail interface, the sliding rail interface being configured to allow radial repositioning of the quantum entanglement emitter (110) to adjust a beam angle or a field of view. The sliding rail interface comprises linear bearing tracks, positional sensors, and locking elements embedded along the radial axis of each modular armature (106). The sliding motion is enabled by miniature actuators or manual pre-deployment positioning systems to reconfigure the spatial footprint of the emitter array in response to changing optical path requirements. Aforementioned rail interface provides for customisation of spacing between inter-emitters and line-of-sight clearance based on mission goals and target distribution geometry. Every cycle of repositioning is tracked by encoder-based sensors that send rail position information to the QPU (112) for verification of alignment. Mechanical guides and thermal dampers are integrated into the sliding rail interface to prevent frictional degradation or thermal expansion during operation in sunlight-exposed or eclipse orbital phases. The rail interface allows dynamic targeting of remote quantum communication nodes by shifting emitter orientation within the lateral plane of the quantum satellite system (100).

In an embodiment, each modular armature (106) may comprise an integrated actuator configured to transform the modular armature (106) between a stowed position and a deployed position based on an orbital phase or an operational command. The actuator comprises miniaturized drive units, hinges, and motion control circuits packaged in the module armature (106). Actuation routines are initiated through control signals generated from the QPU (112) or the Al processor according to mission schedules, target detection information, or ambient conditions. When deployed, the actuator activates the modular armature (106) from the central body (104) to reach a pre-defined spatial structure required for best quantum emission. The retraction occurs in eclipse mission phases, high-radiation incidents, or during launch vehicle encapsulation to shield the quantum entanglement emitter (110). The actuator is driven by onboard-stored energy or rediverted solar panel power and has brake-lock mechanisms to lock armature position upon transition. Embedded sensors within the integrated actuator track angular displacement, rotation rate, and mechanical load and supply real-time feedback to system controllers to enable closed-loop movement adjustment. The actuator assembly is mechanically and thermally isolated to prevent interference with optical alignment stability.

In an embodiment, each modular armature (106) may comprise a locking mechanism configured to retain the quantum entanglement emitter (110) in a fixed deployed position and to prevent an unintentional retraction or a mechanical vibration during quantum emission. Aforementioned locking mechanism consists of interlocking tabs, mechanical latches, or electromechanical clamps incorporated in the joint of the modular armature (106) and terminal end (108). The locking mechanism is engaged automatically after deployment or can be initiated by a command signal received from the QPU (112) upon position verification. Such locking mechanism confers mechanical stiffness and represses translational or rotational motion that can arise due to orbital maneuvers, thermal expansion, or micro-impact events. The locking mechanism employs non-corrosive alloys and vibration-dampening composites that are capable of preserving structural integrity under repeated cycles of deployment and exposure to orbital radiation. Redundant locking paths may be implemented to enable continued emitter stability in the event of partial mechanism failure. Position sensors embedded in the locking mechanism transmit state confirmation to the Al processor for logging and condition monitoring. The locking mechanism supports continuous operation of the quantum entanglement emitter (110) without performance degradation caused by positional drift or misalignment during long-duration emission cycles.

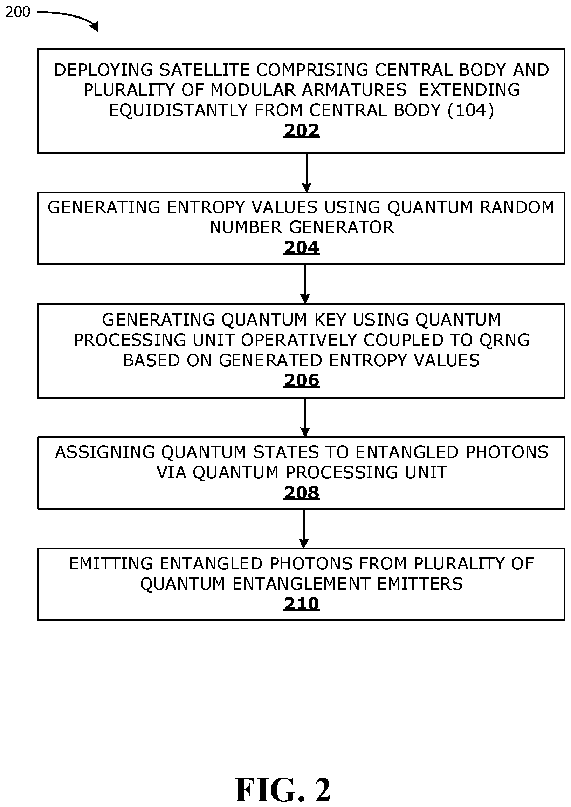

FIG. 2 illustrates a method 200 for operating the quantum satellite system (100). At step 202, a quantum satellite system (100) is deployed in an orbital environment. The quantum satellite system (100) comprises a central body (104) and a plurality of modular armatures (106) extending equidistantly from the central body (104). Each modular armature (106) terminates in a quantum entanglement emitter (110). Deployment includes transitioning each modular armature (106) from a stowed configuration to a deployed configuration to enable geometric balance and line-of-sight establishment. Such deployment facilitates uniform spacing among the quantum entanglement emitters (110), thereby enabling stable beam propagation towards intended quantum nodes. Stabilisation is maintained using onboard attitude mechanisms to optimise the angular positioning of each quantum entanglement emitter (110).

At step 204, entropy values are generated using a quantum random number generator (112) disposed within the quantum satellite system (100). The quantum random number generator (112) uses quantum processes such as single-photon events to extract fundamentally unpredictable values. The outputted entropy is digitised and stored within system memory for further cryptographic processing. Continuous generation of such entropy values supports the secure operations of the system by feeding random seed values to the cryptographic algorithms managed by the quantum processing unit (114). High-quality entropy from the quantum random number generator (112) enables that key derivation in later steps maintains quantum security standards.

At step 206, a quantum key is generated using a quantum processing unit (114) operatively coupled to the quantum random number generator (112). The quantum processing unit (114) derives the key material by processing the entropy values generated in step 204. This derivation may use quantum key distribution (QKD) protocols stored onboard. The quantum processing unit (114) also performs verification checks to ensure the cryptographic strength of the generated key. Upon successful key generation, said key is formatted for embedding within the quantum states assigned to the entangled photons emitted from the quantum entanglement emitter array (116).

At step 208, quantum states are assigned to the entangled photons by the quantum processing unit (114). Each quantum entanglement emitter (110) positioned at a terminal end (108) of the respective modular armature (106) is operatively linked to the quantum processing unit (114). The quantum processing unit (114) allocates specific polarisation, spin angular momentum, or orbital angular momentum states to each pair of entangled photons. Such assignment establishes entanglement-based security characteristics necessary for quantum communication. Timing synchronisation between the quantum processing unit (114) and each quantum entanglement emitter (110) is also managed for coherent quantum state emission over the communication link.

At step 210, the entangled photons are emitted from the quantum entanglement emitters (110) mounted at the terminal ends (108) of the modular armatures (106). The quantum entanglement emitter array (116) that contains several quantum entanglement emitters (110) is driven by the quantum processing unit (114) to simultaneously or sequentially emit the photons based on the chosen protocol. The emitted photons are directed toward remote quantum communication nodes including ground stations or other satellites. Emission parameters such as beam divergence, orientation, and transmission timing are calibrated using data from onboard sensors to maximise entanglement fidelity and communication success rates.

In an embodiment, the method (200) for operating the quantum satellite system (100) further comprises adjusting the orientation of at least one quantum entanglement emitter (110) in real time using a calibration assembly based on angular misalignment measurements. The calibration assembly comprises an array of sensors, actuators, and control circuits embedded within or adjacent to the mounting interface of the quantum entanglement emitter (110) at the terminal end (108) of a modular armature (106). Sensors within the calibration assembly detect angular deviations by comparing the actual beam direction against a predicted trajectory derived from satellite ephemeris data and receiver node coordinates. Measurements may be obtained using star trackers, inertial measurement units, or backscatter photodetectors that monitor alignment drift during orbital motion. Based on the measurements, control instructions are issued to micro-actuators or piezoelectric adjustment plates integrated with the emitter mounting bracket. The actuators re-orient the emitter using fine-angle displacement to restore alignment with the target communication node. Adjustment routines are executed in real time and are governed by feedback loops that maintain continuous positional calibration. The calibration assembly operates autonomously or in response to commands from the QPU (112) or Al processor, thereby preserving emission fidelity and reducing state degradation due to beam-pointing errors.

In an embodiment, housing (102) comprising central body (104) and modular armatures (106) arranged equidistantly facilitates uniform mass distribution and spatial symmetry, resulting in improved orbital stability and reduced attitude control effort. Placement of quantum entanglement emitter (110) at terminal end (108) enables unimpeded optical line-of-sight for directed quantum photon transmission, minimising beam divergence and enhancing link fidelity. QPU (112) allowing for state assignment and key material provides real-time cryptographic control without dependence on ground systems, and QRNG (114) provides high-entropy randomness based on quantum phenomena, constraining predictability of key material and enhancing security of quantum key distribution.

In one embodiment, EMP shielding fins radially mounted from central body (104) reduce high-energy electromagnetic disturbances caused by solar activity. The design spreads shielding evenly over the surface area of system, reducing internal electronic components' vulnerability to transient voltage surges. Shield material integration mitigates possible downtime due to radiation-caused resets or computation errors, maintaining emitter stability and internal state consistency.

In an embodiment, radiation shielding vanes among modular armatures (106) minimizes ionizing radiation effects on qubit-based sub-systems. Inter-armature gap placement shields optical paths and signal channels from radiation, minimizing error rates due to decoherence. Layering of composite materials attenuates further incident radiation from varied angles.

In one embodiment, use of boron carbide or graphene composite for every radiation shielding vane enhances mechanical stability and minimized mass with provision of efficient high-energy particle absorption. Boron carbide offers neutron moderation and gamma shielding, whereas graphene composite facilitates thermal dispersion and micrometeoroid resistance enhancing long-term operational reliability of adjacent quantum components.

In one embodiment, passive cooling layer and active cooling circuit in thermal control unit control operational temperature of internal subsystems during sun and eclipse cycles. Radiative components vent heat during high-load operation, and thermally conductive fluid dissipates excess thermal energy from QPU (112) and quantum random number generator (114), diminishing thermal drift and improving photon stability.

In an embodiment, docking node located on housing (102) supports secure firmware updates, encrypted data offload, and diagnostic access without interrupting core quantum communication functions. The node enables autonomous reconfiguration during mission lifecycle and supports long-term maintainability of onboard control logic, calibration sequences, and mission telemetry.

In an embodiment, Al processor associated with QPU (112) dynamically assigns quantum routing strategies and encryption modes based on node availability, mission constraints, and environmental factors. Real-time decision-making supports resilience to communication loss or link degradation by adjusting transmission scheduling and entanglement distribution topology.

In an embodiment, communication interface on housing (102) establishes quantum links with spatially distributed external nodes, facilitating long-range entanglement distribution and cross-orbit key propagation. Beam steering and pointing controls maintain optical alignment during orbital transitions, reducing acquisition time and minimising misalignment-induced signal loss.

In an embodiment, quantum entanglement emitter array (116) emitting toward multiple spatially distinct nodes supports concurrent entanglement distribution and parallel quantum key sessions. Redundancy across spatially diverse receivers mitigates atmospheric blockage or target unavailability and increases network robustness in distributed quantum architectures.

In a specific embodiment, threat detection antennas on housing (102) identify anomalies such as electromagnetic interference or high-speed debris impact. In response, signal generation triggers mitigation activities such as emission suspension or subsystem isolation, avoiding risk of data corruption or physical component damage.

In one embodiment, deployment mechanism in modular armature (106) provides transition of quantum entanglement emitter (110) from stow to operating position so that emitter may be aligned with prescribed transmission vectors. Such configuration provides compact storage in launch and increased emitter coverage upon deployment to orbit.

In an embodiment, Al-managed data repository connected to QPU (112) provides secure management of data access, retention, and erasure. Telemetry, mission state, and security metrics govern encryption routines and deletion protocols, reducing risk of data compromise during threat exposure or telemetry anomalies.

In an embodiment, quantum entanglement emitter array (116) supports simultaneous photon emission across multiple quantum domains, including polarisation, spin angular momentum, and orbital angular momentum. Domain diversity supports advanced quantum communication encoding schemes, improving channel capacity and multi-node interoperability.

In an embodiment, sliding rail interface between modular armature (106) and central body (104) enables radial repositioning of quantum entanglement emitter (110). Beam orientation and field-of-view adjustments reduce pointing error and expand reach of emitter toward targets outside initial fixed vector.

In one embodiment, integrated actuator of modular armature (106) converts armature from stowed to deployed state in accordance with orbital phase or command. Actuation keeps structural condition ready for emission and facilitates retraction during high-risk or storage phase, minimizing wear and enhancing safety.

In an embodiment, locking mechanism within modular armature (106) retains quantum entanglement emitter (110) in deployed position, preventing retraction or vibrational instability. The fixation maintains emission accuracy and avoids state decoherence due to mechanical displacement during orbital movement or satellite operations.

In an embodiment, method comprises deploying quantum satellite system (100) into orbit, where equidistant arrangement of modular armatures (106) supports balanced mass distribution and rotational stability. Entropy values are generated by QRNG (114) and processed by QPU (112) into quantum key material. Quantum states are assigned to photons, which are emitted from quantum entanglement emitters (110) toward remote nodes. Emission is coordinated for time and target synchronisation, while physical layout preserves structural balance during orbital drift or attitude adjustments.

In an embodiment, orientation of quantum entanglement emitter (110) is adjusted in real time using calibration assembly. The assembly uses angular misalignment data to drive actuators or optical mounts, correcting deviations and preserving photon trajectory toward target nodes. Feedback control prevents long-term drift and maintains emitter alignment across orbital phases.

In a deployed orbital configuration, the quantum satellite system 100 orbits at a specified low-Earth orbital altitude in synchronization with a constellation of remote quantum communication nodes that comprise a plurality of ground stations and co-orbiting satellite nodes. In a timed quantum key distribution session, the quantum processing unit (QPU) 112 contained in the central body 104 begins a session-specific entanglement protocol consistent with preloaded mission parameters and temporal synchronization from an onboard clock system.

The quantum random number generator (QRNG) 114 generates entropy values by harnessing inherent quantum noise characteristics derived from a quantum optical process. The generated entropy values are transformed into quantum key material, which is temporally segmented and formatted by the QRNG (114). The QRNG (114) communicates the quantum key material and entropy seed metadata to the QPU 112 via an internal high-speed data bus.

The QPU 112 maps quantum states to the quantum key material and sends operational commands to a quantum entanglement emitter array 116. The QPU 112 also drives associated modular armatures 106 that are separated by a regular interval along the center body 104. Each modular armature 106 has a quantum entanglement emitter 110 located on a terminal end 108 and that sends a quantum photon stream in a line-of-sight direction to a chosen distant quantum communication node.

A subset of quantum entanglement emitters 110 emit entangled photon pairs with spatial separation such that one photon of the pair is directed toward a first ground station positioned within the satellite's visibility cone, while the corresponding entangled photon is retained on-board for correlation measurement. Another subset of emitters 110 directs photon pairs to multiple co-orbiting satellite nodes operating as relay elements within a quantum mesh network.

QPU 112 simultaneously handles the important synchronization, entanglement fidelity check, and photon correlation tracking, thereby facilitating secure quantum key establishment with the receiving node. After key establishment, the quantum key material is employed to encrypt secure data, uplink control, or inter-satellite authentication depending on mission requirement.

The modular construction of the armatures 106 allows for the emitters 110 to be dynamically realigned or relocated in order to address changes in satellite pointing, atmospheric loss models, or inter-node availability. Real-time telemetry of emitter orientation, photon emission status, and quantum bit error rates (QBER) is relayed back to mission control via a classical communication downlink.

Such an operational sequence enables real-time, high-security quantum key generation and distribution across space-ground and space-space communication networks, reducing susceptibility to interception or man-in-the-middle attacks and enabling quantum-secure communication channels for defense, surveillance, and infrastructure protection applications.

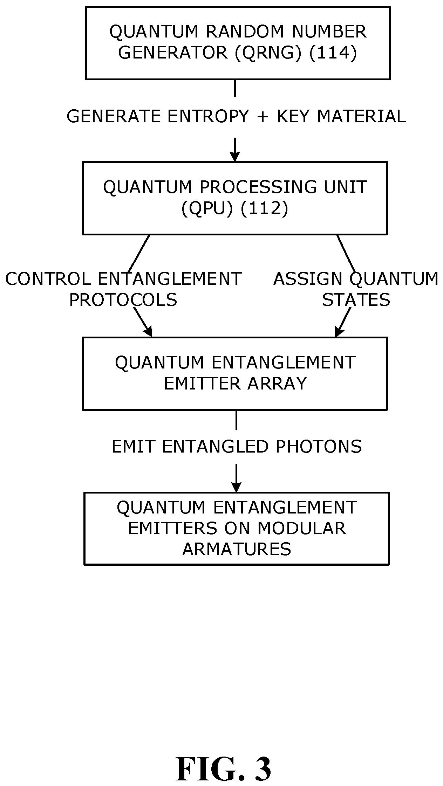

FIG. 3 illustrates a data flow diagram representing the sequential information exchange and functional hierarchy within a quantum satellite system. The flow of data starts with the QRNG (114) that produces entropy values and then derives quantum key material from non-deterministic quantum events. The output is sent to the quantum processing unit (QPU) (112), which is functionally connected to the QRNG (114). The QPU (112) processes the received entropy and key material in order to manage entanglement protocols and allocate quantum states to outgoing entangled photons. Control signals and state assignment parameters are concurrently directed to a quantum entanglement emitter array, which serves as the intermediary hardware for coordinating distributed emission tasks. Upon receiving the control directives, the quantum entanglement emitter array activates specific emitters positioned at the terminal ends of modular armatures. Each emitter in the array initiates photon emission events based on the synchronised instructions and assigned quantum states, thereby transmitting entangled photons toward one or more remote quantum communication nodes.

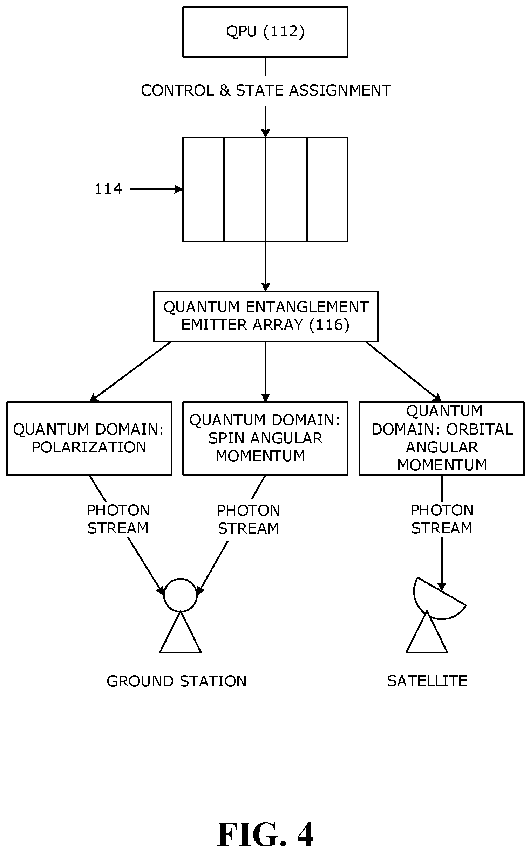

FIG. 4 illustrates domain-based photon distribution by the quantum entanglement emitter array (116) to multiple remote quantum nodes. The QPU (112) performs control and state assignment functions to define the quantum parameters of each photon emission event. The parameters are set according to system entropy and scheduling key inputs in order to allow for preparation of quantum states over several degrees of freedom. The quantum entanglement emitter array (116) has several emitters, each of which can encode photons in a separate quantum domain. As shown, the emission is distributed across at least three quantum domains: polarisation, spin angular momentum, and orbital angular momentum. Each domain-specific photon stream is directed toward a remote node, which may comprise ground stations or satellite-based receivers capable of processing the respective quantum state information. The simultaneous distribution across domains allows parallel quantum communication sessions and expands the capacity of the system to accommodate multiple entangled links concurrently. The photon streams remain synchronised with the state definitions provided by the QPU (112), maintaining entanglement integrity and timing coherence across each transmission path.

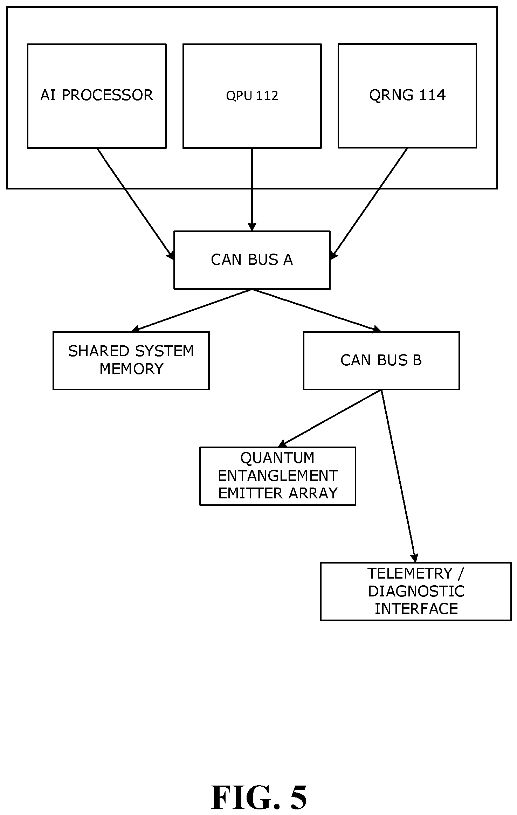

FIG. 5 illustrates a system-level communication architecture for coordinating quantum operations within the quantum satellite system (100). The architecture includes an Al processor, a quantum processing unit (QPU) (112), and a quantum random number generator (QRNG) (114), which collectively interface via CAN Bus A. The bus enables real-time data exchange and synchronisation across control, entropy generation, and state assignment functions. Shared memory is connected to CAN Bus A, serving as a mission data and time-critical parameter buffer and storage facility. CAN Bus B provides a redundant link for shared memory-quantum entanglement emitter array communication, with provision for providing scheduled quantum states and emission schedules in real time. Telemetry and diagnostic interface is also connected to CAN Bus B, enabling real-time monitoring of system health, error detection, and diagnostic reporting.

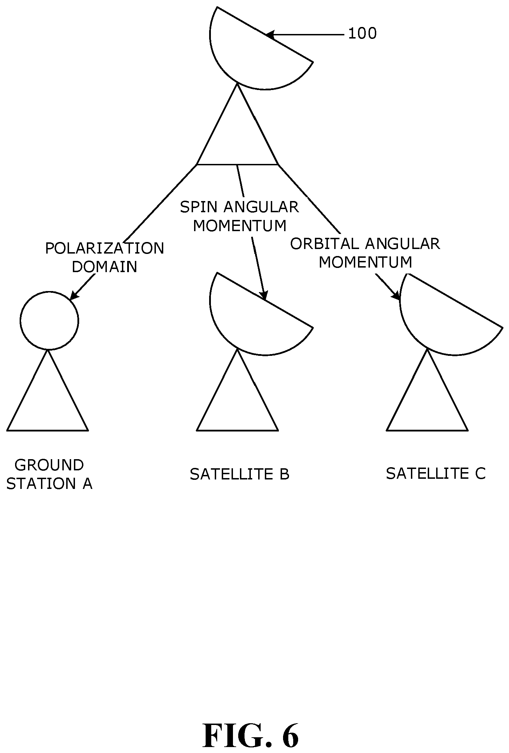

FIG. 6 illustrates the domain-based distribution of entangled photon streams from a quantum satellite system (100) to multiple remote quantum communication nodes. The system directs quantum information simultaneously across three quantum domains: polarisation, spin angular momentum, and orbital angular momentum. Each quantum domain represents a distinct encoding parameter used for parallel entanglement-based communication. The photon stream associated with the polarisation domain is transmitted toward ground station A. The photon stream corresponding to spin angular momentum is transmitted toward satellite B, and the photon stream corresponding to orbital angular momentum is transmitted toward satellite C. The domain-specific routing facilitates concurrent quantum communication sessions without mutual interference. Each target node is pre-associated with domain compatibility to enable accurate state detection and key derivation.

Example embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including hardware, software, firmware, and a combination thereof. For example, in one embodiment, each block of the block diagrams and flowchart illustrations, and combinations of blocks in the block diagrams and flowchart illustrations can be implemented by computer program instructions. These computer program instructions may be loaded onto a general-purpose computer, special purpose computer, or other programmable data processing apparatus to produce a machine, such that the instructions which execute on the computer or other programmable data processing apparatus create means for implementing the functions specified in the flowchart block or blocks.

Throughout the present disclosure, the term 'processing means' or 'microprocessor' or 'processor' or 'processors' includes, but is not limited to, a general purpose processor (such as, for example, a complex instruction set computing (CISC) microprocessor, a reduced instruction set computing (RISC) microprocessor, a very long instruction word (VLIW) microprocessor, a microprocessor implementing other types of instruction sets, or a microprocessor implementing a combination of types of instruction sets) or a specialized processor (such as, for example, an application specific integrated circuit (ASIC), a field programmable gate array (FPGA), a digital signal processor (DSP), or a network processor).

The term "non-transitory storage device" or "storage" or "memory," as used herein relates to a random access memory, read only memory and variants thereof, in which a computer can store data or software for any duration.

Operations in accordance with a variety of aspects of the disclosure is described above would not have to be performed in the order described. Rather, various steps can be handled in reverse order or simultaneously or not at all.

While several implementations have been described and illustrated herein, a variety of other means and/or structures for performing the function and/or obtaining the results and/or one or more of the advantages described herein may be utilized, and each of such variations and/or modifications is deemed to be within the scope of the implementations described herein. More generally, all parameters, dimensions, materials, and configurations described herein are meant to be exemplary and that the actual parameters, dimensions, materials, and/or configurations will depend upon the specific application or applications for which the teachings is/are used. Those skilled in the art will recognize or be able to ascertain using no more than routine experimentation, many equivalents to the specific implementations described herein. It is, therefore, to be understood that the foregoing implementations are presented by way of example only and that, within the scope of the appended claims and equivalents thereto, implementations may be practiced otherwise than as specifically described and claimed. Implementations of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present disclosure.

## Claims

1. A quantum satellite system (100) comprising:
a housing (102) comprising:
a central body (104); and
a plurality of modular armatures (106) extending outwardly from the central body (104) wherein the plurality of modular armatures (106) is arranged equidistantly, wherein each modular armature (106) receives, at a terminal end (108), a quantum entanglement emitter (110) that is configured to emit the entangled photons towards a remote quantum communication node;
a quantum random number generator (QRNG) (114) is configured to generate the entropy values;
a quantum processing unit (QPU) (112) operatively coupled to the QRNG (114) and to a quantum entanglement emitter array (116), the QPU (112) configured to:
assign the quantum states to the emitted entangled photons;
generate a quantum key using the generated entropy values; and
control the quantum entanglement emitter array (116) to coordinate emission of the entangled photons.

2. The quantum satellite system (100) of claim 1, further comprising a plurality of EMP shielding fins extending radially from the central body (104), the EMP shielding fins being configured to absorb and deflect the electromagnetic pulses originating from the solar radiation.

3. The quantum satellite system (100) of claim 1, further comprising a plurality of radiation shielding vanes disposed between the adjacent modular armatures (106), the radiation shielding vanes being configured to attenuate ionizing radiation for reducing qubit decoherence.

4. The quantum satellite system (100) of claim 3, wherein each radiation shielding vane is formed of a material selected from boron carbide or a graphene composite.

5. The quantum satellite system (100) of claim 1, wherein the housing (102) comprises a thermal control unit comprising:
a passive cooling layer configured to dissipate heat via the radiative pathways and the conductive pathways; and
an active cooling circuit configured to circulate a thermally conductive fluid or a refrigerant to regulate temperature.

6. The quantum satellite system (100) of claim 1, wherein the housing (102) comprises a docking node to enable reprogramming of onboard firmware, offloading of encrypted mission data, and access to the diagnostic interfaces.

7. The quantum satellite system (100) of claim 1, further comprising an artificial intelligence (AI) processor operatively associated with the quantum processing unit (112), the Al processor being configured to:
monitor the contextual parameters including the mission objectives, a node availability, or the threat conditions; and
dynamically assign the encryption policies or the quantum routing instructions based on the monitored parameters.

8. The quantum satellite system (100) of claim 1, wherein the housing (102) comprises a communication interface to enable establishment of the quantum communication links with a distributed network of the external nodes.

9. The quantum satellite system (100) of claim 1, wherein the quantum entanglement emitter array (116) is configured to emit the entangled photons towards at least two spatially distinct ground stations or the satellite nodes to support quantum entanglement distribution across a mesh network.

10. The quantum satellite system (100) of claim 1, further comprising a plurality of threat detection antennas mounted on the housing (102), each of the threat detection antennas being configured to detect at least one of: electromagnetic interference, the high-velocity impact events, or the elevated radiation levels, and to generate a response signal based thereon.

11. The quantum satellite system (100) of claim 1, wherein each modular armature (106) comprises a deployment mechanism configured to extend the quantum entanglement emitter (110) outward from a stowed configuration during an operational mode.

12. The quantum satellite system (100) of claim 1, further comprising an Al-managed data repository operatively coupled to the quantum processing unit (112), the data repository being configured to dynamically control a data retention, the access privileges, and a secure deletion of quantum-sensitive information based on the detected threats, the operational conditions, or a telemetry status.

13. The quantum satellite system (100) of claim 1, wherein the quantum entanglement emitter array (116) is configured to emit entangled photons simultaneously across a plurality of quantum domains, the quantum domains comprising polarization, spin angular momentum, and orbital angular momentum.

14. The quantum satellite system (100) of claim 1, wherein each modular armature (106) is mechanically coupled to the central body (104) via a sliding rail interface, the sliding rail interface being configured to allow radial repositioning of the quantum entanglement emitter (110) to adjust a beam angle or a field of view.

15. A method (200) for operating a quantum satellite system (100), the method (200) comprising:
deploying a satellite comprising a central body (104) and the plurality of modular armatures (106) extending equidistantly from the central body (104);
generating the entropy values using a quantum random number generator (114);
generating a quantum key using a quantum processing unit (112) operatively coupled to the quantum random number generator (114) based on the generated entropy values;
assigning the quantum states to the entangled photons via the quantum processing unit (112); and
emitting the entangled photons from the plurality of quantum entanglement emitters (110) mounted at the terminal ends (108) of the modular armatures (106).
